# FASCICULE DE BREVET EUROPEEN

(11) **EP 0 871 304 B1**
(45) Date de publication et mention de la délivrance du brevet: **02.02.2005**
(21) Numéro de dépôt: 98400866.4
(22) Date de dépôt: 09.04.1998
(51) Int. Cl.: H04L 7/00, H04J 14/08, H04B 10/17

(54) **Procédé et dispositif de mise en forme d'un signal binaire optique**
Verfahren und Vorrichtung zur Formung eines optischen binären Signales
Method and device for forming an optical binary signal

(30) Priorité: 10.04.1997 FR 9704404
(43) Date de publication de la demande: 14.10.1998
(73) Titulaire: ALCATEL, 75008 Paris (FR)
(72) Inventeur: Chiaroni, Dominique, 92160 Antony (FR); Chauzat, Corinne, 94000 Creteil (FR); Sotom, Michel, 75015 Paris (FR); de Bouard, Dominique, 91700 Ste-Geneviève-Des-Bois (FR)
(74) Mandataire: Fournier, Michel Robert Marie

(56) Documents cités:
- EP-A- 0 635 991
- EP-A- 0 746 070
- PATENT ABSTRACTS OF JAPAN vol. 018, no. 213 (E-1538), 15 avril 1994 & JP 06 013981 A (NIPPON TELEGR & TELEPH CORP), 21 janvier 1994,
- TUCKER R S ET AL: "OPTICAL TIME-DIVISION MULTIPLEXING FOR VERY HIGH BIT-RATE TRANSMISSION" JOURNAL OF LIGHTWAVE TECHNOLOGY, NEW YORK, NY, US, vol. 6, no. 11, novembre 1988, pages 1737-1749, XP000002209

## Description

L'invention se situe dans le domaine des systèmes de communication optiques dans lesquels s'effectuent la transmission, le routage et le traitement optiques de données numériques optiques.

Généralement, les informations véhiculées dans ces systèmes sont des données binaires ayant la forme d'impulsions rythmées à une fréquence d'horloge déterminée. Les niveaux d'amplitude de ces impulsions sont représentatifs de ces données binaires. Initialement, ces impulsions sont sous forme électrique, puis elles sont converties en un signal optique obtenu par une modulation de puissance (ou d'amplitude) d'une onde porteuse optique (voir p. ex. EP-A-0 746 070).

Avant d'introduire le signal optique dans le système, il est souhaitable que les impulsions optiques qui le constituent soient parfaitement calibrées aussi bien en phase qu'en amplitude. Cependant, même si le signal à transmettre est bien calibré lors de sa création, sa transformation en signal optique s'effectue généralement après un transit à travers divers dispositifs électriques et/ou optiques ayant pour effet d'introduire des fluctuations de phase (gigue) et d'amplitude. Ces fluctuations ont pour conséquence d'augmenter le taux d'erreurs au niveau des récepteurs, ce qui conduit à limiter le débit et/ou les distances de transmission.

L'invention a pour but de résoudre ce problème en proposant un procédé de mise en forme d'un signal optique à transmettre, cette mise en forme étant entièrement réalisée dans le domaine optique et pouvant s'appliquer aussi bien à un signal d'entrée électrique qu'optique.

Plus précisément, l'invention a pour objet un procédé de mise en forme d'un signal d'entrée ayant une amplitude modulée entre des niveaux hauts et des niveaux bas qui représentent des données binaires contenues dans des intervalles de temps bit successifs de durée TO, caractérisé en ce qu'il comporte une étape de resynchronisation consistant notamment :
- à former un nombre p de signaux échantillonnés obtenus par modulations d'amplitude de p ondes porteuses optiques de longueurs d'onde différentes, chaque signal échantillonné étant constitué d'échantillons ayant la forme d'impulsions de fréquence 1/T0, d'une durée déterminée au plus égale à T0/p et d'amplitude fonction de l'amplitude du signal d'entrée,
- à former un signal resynchronisé constitué d'une combinaison de signaux retardés obtenus en appliquant auxdits signaux échantillonnés des retards tels que deux signaux retardés consécutifs quelconques soient décalés temporellement de sensiblement ladite durée déterminée.

Ainsi, l'invention exploite la dimension spectrale du domaine optique de façon à éviter la création de bruit interférométrique.

Selon une première possibilité, le procédé est en outre caractérisé en ce qu'on combine lesdits signaux échantillonnés avant de leur appliquer lesdits retards, en exploitant les différences de leurs longueurs d'onde.

Selon une deuxième possibilité, on applique par contre les retards auxdits signaux échantillonnés avant de les combiner.

Bien que ces deux possibilités soient en principe fonctionnellement équivalentes, nous verrons ultérieurement que la première possibilité permet une mise en oeuvre plus économique.

Selon une autre variante, lesdits signaux retardés sont obtenus en formant des signaux optiques d'échantillonnage résultant de modulations desdites ondes porteuses par un signal d'horloge d'échantillonnage de fréquence 1/T0, constitué d'impulsions de durée sensiblement égale à ladite durée déterminée et d'amplitude constante, puis en modulant l'amplitude desdites signaux optiques d'échantillonnage en fonction de l'amplitude dudit signal d'entrée.

Dans le domaine de l'amplitude, un paramètre représentatif de la qualité d'un signal optique est le taux d'extinction qui est défini comme le rapport des puissances correspondant respectivement aux niveaux hauts et bas du signal.

Aussi, afin de compléter la mise en forme dans le domaine de l'amplitude en améliorant le taux d'extinction et selon un autre aspect de l'invention, le procédé inclut une égalisation des niveaux bas et/ou hauts du signal resynchronisé.

L'invention a également pour objet un dispositif pour la mise en oeuvre du procédé définit ci-dessus.

Le dispositif est caractérisé en ce qu'il comporte :
- des premiers moyens pour former un nombre p de signaux échantillonnés obtenus par modulations d'amplitude de p ondes porteuses optiques de longueurs d'onde différentes, chaque signal échantillonné étant constitué d'échantillons ayant la forme d'impulsions de fréquences 1/T0, de durée sensiblement égale à T0/p et d'amplitude fonction de l'amplitude du signal d'entrée, et
- des seconds moyens pour former un signal resynchronisé constitué d'une combinaison de signaux retardés obtenus en appliquant auxdits signaux échantillonnés des retards tels que deux signaux retardés consécutifs quelconques soient décalés temporellement de sensiblement ladite durée déterminée.

Selon un mode de réalisation particulier, lesdits premiers moyens comportent des troisièmes moyens pour former p signaux d'échantillonnage constitués chacun d'impulsions optiques d'échantillonnage portées respectivement par lesdites longueurs d'onde différentes, de fréquence 1/T0 et d'une durée déterminée (δ) au plus égale à T0/p et des quatrièmes moyens pour moduler l'amplitude desdites impulsions d'échantillonnage en fonction dudit signal d'entrée.

Dans le cas particulier où le signal d'entrée est un signal optique, on prévoira avantageusement que lesdits quatrièmes moyens comportent un milieu amplificateur optique saturable recevant par un premier port ledit signal d'entrée et par un port opposé lesdits signaux d'échantillonnage.

Cette dernière variante de réalisation présente l'avantage que le milieu amplificateur saturable a la double fonction de moduler l'amplitude des signaux d'échantillonnage en fonction du signal d'entrée et d'amplifier le signal en résultant. Par ailleurs, le milieu amplificateur saturable a un effet d'égalisation consistant à atténuer les fluctuations éventuelles des niveaux hauts des impulsions qu'il fournit. Cette propriété est particulièrement bien adaptée pour compléter la mise en forme dans le domaine de l'amplitude au moyen d'un convertisseur de longueur d'onde à structure interférométrique pouvant recevoir directement en entrée le signal resynchronisé et fournissant un signal de sortie parfaitement remis en forme.

D'autres aspects et avantages de l'invention apparaîtront dans la suite de la description en référence aux figures.
- La figure 1 représente un premier mode de réalisation du dispositif de mise en forme selon l'invention, dans le cas où le signal d'entrée est un signal optique.
- La figure 2 représente des chronogrammes permettant d'expliquer le procédé selon l'invention.
- La figure 3 représente une variante de réalisation du dispositif selon l'invention.
- Les figures 4 et 5 représentent d'autres variantes de réalisation du dispositif selon l'invention, dans le cas où le signal d'entrée est un signal électrique.

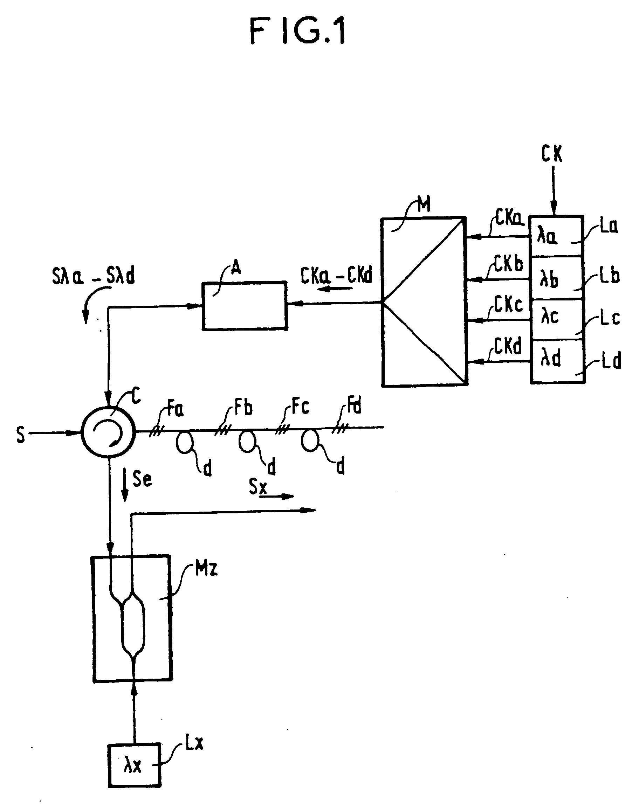

Le dispositif représenté à la figure 1 est un premier mode de réalisation d'un dispositif de mise en oeuvre du procédé selon l'invention, dans le cas d'un signal d'entrée optique.

Il comporte un premier étage apte à fournir un signal resynchronisé Se à partir du signal d'entrée S. Cet étage comporte un circulateur C à quatre ports. Un premier port reçoit le signal d'entrée S, un second port est relié à un amplificateur optique saturable A, un troisième port est relié à un dispositif à retard constitué des filtres Fa, Fb, Fc, Fd montés en cascade par l'intermédiaire de lignes à retard d, et un quatrième port fournissant le signal resynchronisé Se.

L'amplificateur A comporte un premier port relié au second port du circulateur C et un second port opposé au premier relié à la sortie d'un multiplexeur M. L'amplificateur A est typiquement un amplificateur optique semi-conducteur avantageusement à gain stabilisé.

Dans le cas général, le multiplexeur M reçoit en entrée p signaux optiques d'échantillonnage formé d'impulsions . A titre d'exemple non limitatif, on a pris ici p = 4 et les signaux optiques d'échantillonnage CKa, CKb, CKc, CKd correspondants sont fournis respectivement par quatre sources optiques La, Lb, Lc, Ld aptes à générer des ondes porteuses de longueurs d'onde différentes. Ces sources sont modulables par un signal d'horloge d'échantillonnage CK.

En pratique, les sources La-Ld comportent des oscillateurs laser fournissant respectivement les ondes porteuses de longueurs d'onde λa, λb, λc, λd. Dans le cas où le signal CK est électrique, les sources La-Ld peuvent être constituées d'oscillateurs laser dont l'alimentation en courant est commandée en fonction du signal CK. Il peut s'agir aussi de lasers à modulateur intégré. Si le signal CK est un signal optique, les sources La-Ld peuvent être constituées de lasers autopulsés tels que décrits dans l'article intitulé "18 GHz All-Optical Frequency Locking and Clock Recovery Using a Self-Pulsating Two-Section DFB-Laser", U. Feiste et al, IEEE PHOTONICS TECHNOLOGY LETTERS, vol. 6, n°1, janvier 1994.

Dans le cas général, si T0 est l'intervalle de temps bit du signal d'entrée S, chaque signal optique d'échantillonnage CKa-CKd résulte de la modulation d'une des ondes porteuses par un signal d'horloge d'échantillonnage CK de fréquence 1/T0 et constitué d'impulsions de durée déterminée à au plus égale à T0/p et d'amplitude constante. Dans le cas particulier où le signal d'entrée S est de type NRZ, cette durée déterminée δ sera sensiblement égale à T0/p.

Les filtres Fa, Fb, Fc, Fd sont des filtres réjecteurs accordés respectivement pour réfléchir les longueurs d'onde λa-λd. Pour tenir compte des trajets aller et retour des ondes, les lignes à retard d sont dimensionnées chacune pour créer un retard sensiblement égal à la moitié de ladite durée déterminée δ. Dans le cas où le signal d'entrée S est de type NRZ, ce retard sera T0/2p

. Le signal resynchronisé Se est appliqué à l'entrée d'un second étage constitué d'un convertisseur de longueur d'onde à structure interférométrique MZ associée à un oscillateur laser Lx. La structure interférométrique MZ représentée est du type Mach-Zehnder. Elle comporte deux branches véhiculant deux ondes cohérentes issues de l'oscillateur Lx et couplées pour fournir le signal de sortie Sx. L'une des branches reçoit en outre le signal d'entrée Se. Cette branche comporte un milieu dont l'indice varie en fonction de la puissance optique totale qu'elle véhicule. Ainsi, les variations de puissance du signal d'entrée modulent l'indice et les deux ondes cohérentes peuvent interférer de façon destructive ou constructive en fonction du niveau de puissance du signal d'entrée. Une description détaillée de ce type de convertisseur est par exemple donnée dans l'article "Wagelength Conversion by Optimized Monolithic Integrated Mach-Zehnder Interferometer", C. Joergensen et al, IEEE PHOTONICS TECHNOLOGY LETTERS, VOL. 8, n° 4, avril 1996.

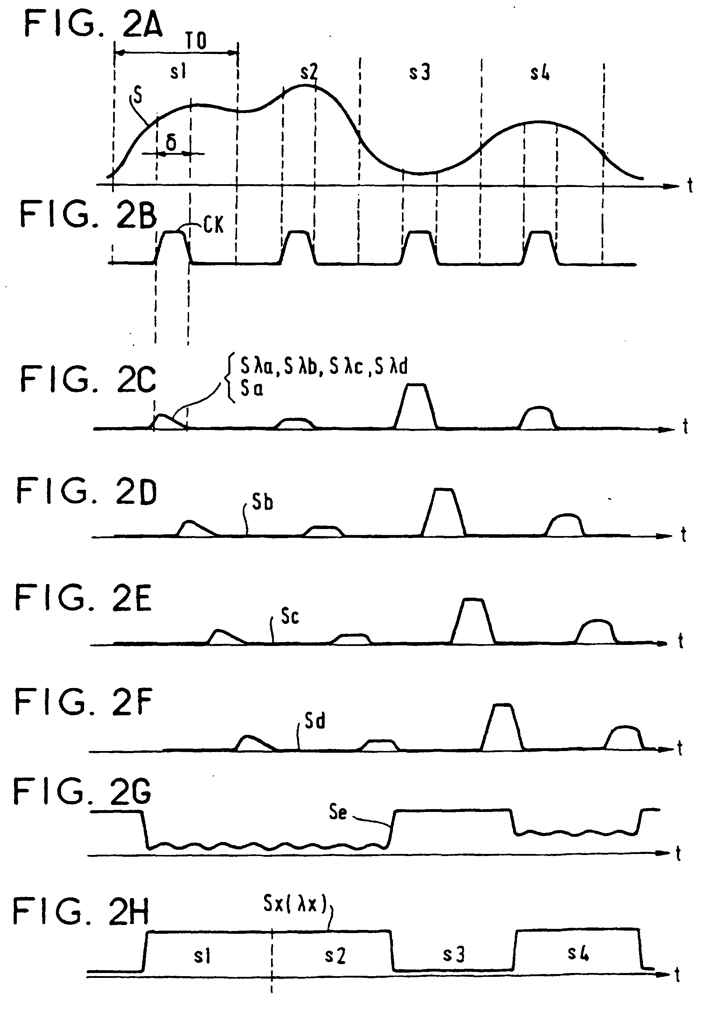

Le fonctionnement du dispositif de la figure 1 va maintenant être décrit à l'aide des chronogrammes a) à h) de la figure 2.

Le chronogramme a) représente un exemple de variations en fonction du temps de l'amplitude d'un signal d'entrée S de type NRZ. Cette amplitude est modulée entre des niveaux hauts et des niveaux bas qui représentent des données binaires s1, s2, s3, s4 contenues dans des intervalles de temps bit successifs de durée T0. Selon cet exemple, le signal représente successivement les données binaires 1,1,0,1.

Le chronogramme b) représente le signal d'horloge d'échantillonnage CK. Il est constitué d'une succession d'impulsions de durée δ et de fréquence 1/T0. Dans le cas général où l'on dispose d'un nombre p de sources optiques et si on veut fournir un signal resynchronisé Se de type NRZ comme le signal d'entrée S, la durée δ sera choisie sensiblement égale à T0/p. Dans l'exemple représenté où p = 4, on aura δ = T0/4. Le signal CK est calé par rapport au signal d'entrée S de sorte que les impulsions qui le constituent apparaissent au voisinage du milieu des intervalles de temps bit T0.

Les sources La-Ld modulées par le signal CK fournissent des signaux optiques d'échantillonnage CKa-CKd (non représentés) portés respectivement par les longueurs d'onde λa-λd et dont l'amplitude reproduit celle du signal CK.

Les signaux d'échantillonnage CKa-CKb sont combinés par le multiplexeur M puis injectés dans l'amplificateur A par son second port. Par son premier port, l'amplificateur A reçoit le signal optique d'entrée S issu du second port du circulateur C. Le signal S est ainsi injecté en sens opposé. Comme le milieu amplificateur est saturable, le gain appliqué aux signaux CKa-CKb est modulé par l'amplitude du signal optique d'entrée S. Le premier port de l'amplificateur A fournit alors au second port du circulateur C des signaux échantillonnés Sλa-Sλd portés respectivement par les longueurs d'onde λa-λd, comme représentés sur le chronogramme c).

Ces signaux échantillonnés Sλa-Sλd sont appliqués au dispositif à retard formé des filtres Fa-Fd et des lignes à retard d par l'intermédiaire du troisième port du circulateur C. Les filtres Fa-Fd étant des filtres réjecteurs calés respectivement sur les longueurs d'onde λa-λd et les lignes à retard d étant dimensionnée chacune pour créer un retard égal à T0/2p = T0/8, le dispositif à retard fournit au circulateur C les signaux Sa-Sd portés respectivement par les longueurs d'onde λa-λd, comme représentées respectivement sur les chronogrammes c) à f). Le quatrième port du circulateur C délivre alors le signal resynchronisé Se qui est la combinaison des signaux Sa-Sd comme représenté sur le chronogramme g).

On constate que les niveaux bas du signal d'entrée S se traduisent par des niveaux hauts correspondant du signal resynchronisé Se et réciproquement. Grâce au phénomène de saturation du gain de l'amplificateur A, les niveaux hauts du signal Se sont bien égalisés. Par contre, les niveaux bas du signal Se présentent encore des niveaux de puissances non nuls, ce qui traduit un taux d'extinction perfectible.

Ce défaut est facilement corrigé grâce au convertisseur de longueur d'onde à structure interférométrique MZ du second étage. Ce dernier fournit alors le signal de sortie Sx, porté par la longueur d'onde λx et complètement remis en forme, comme représenté sur le chronogramme h).

On peut noter que l'égalisation des niveaux hauts du signal resynchronisé Se par le premier étage a pour effet de stabiliser le fonctionnement du convertisseur à structure interférométrique.

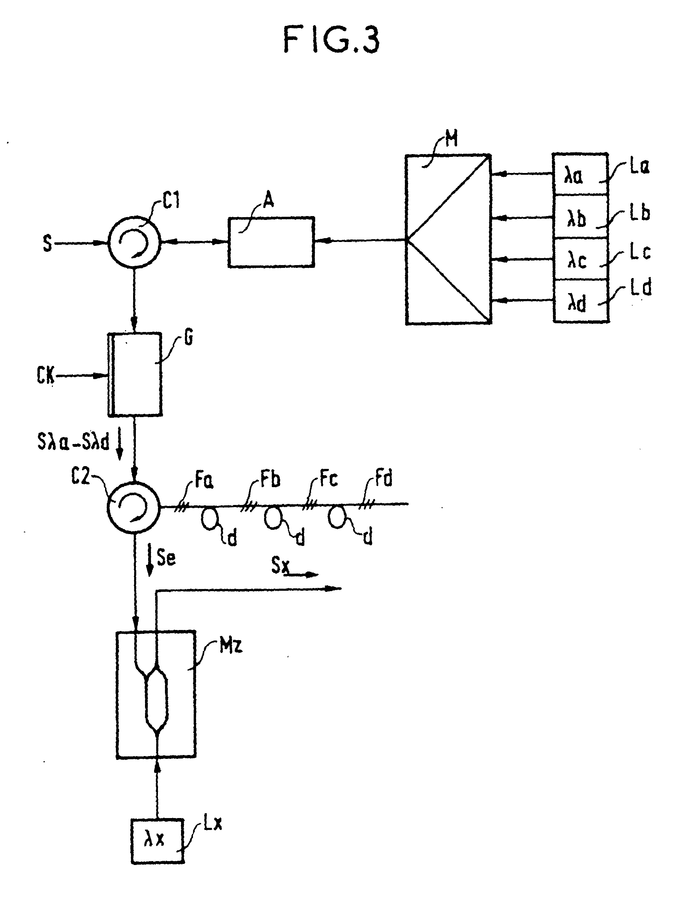

La figure 3 représente une variante de réalisation du dispositif selon l'invention. Selon cette variante, les sources La-Ld fournissent des ondes porteuses continues qui sont d'abord modulées comme précédemment par le signal optique d'entrée S au moyen du premier circulateur C1 et de l'amplificateur A. Le signal en résultant est ensuite modulé par le signal d'horloge d'échantillonnage CK au moyen d'une porte optique G. La porte G fournit les signaux Sλa-Sλd déjà définis précédemment.

Le dispositif représenté à la figure 3 est fonctionnellement identique à celui de la figure 1. Cette réalisation est cependant plus simple mais présente l'inconvénient que la modulation par le signal d'horloge CK doit s'appliquer à des signaux déjà amplifiés par l'amplificateur A.

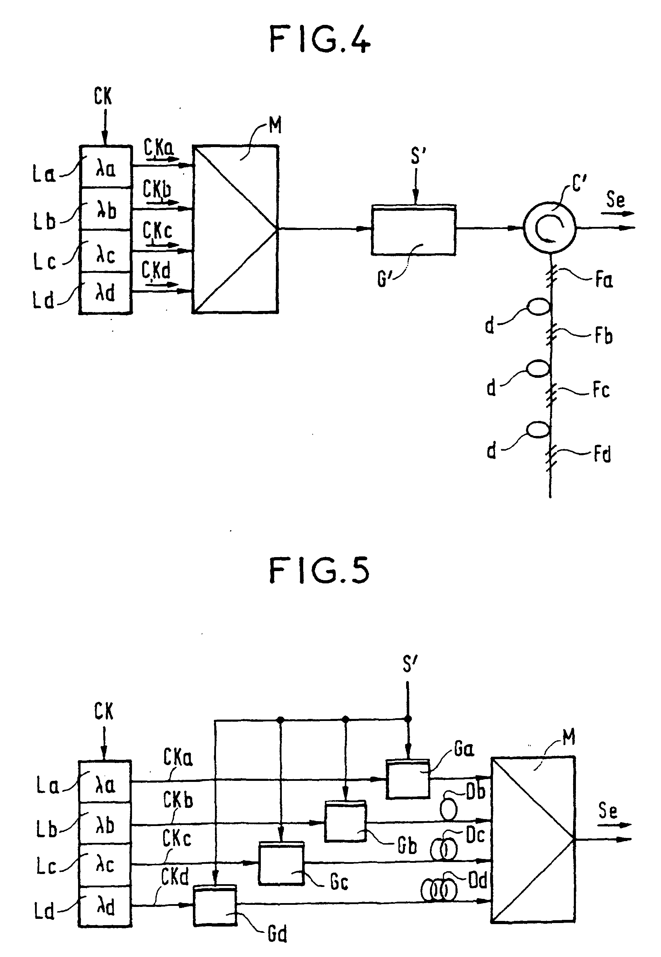

La figure 4 représente le premier étage d'un autre exemple de réalisation du dispositif selon l'invention, utilisable dans le cas où le signal d'entrée S' est un signal électrique.

Le dispositif comporte comme précédemment plusieurs sources optiques La-Ld commandées par le signal d'horloge d'échantillonnage CK et qui fournissent au multiplexeur M les signaux d'échantillonnage CKa-CKd. La sortie du multiplexeur M est reliée à un premier port d'un circulateur C' par l'intermédiaire d'une porte optique G' commandée par le signal d'entrée S'. Un deuxième port du circulateur C' est relié au dispositif à retard déjà défini précédemment. Un troisième port du circulateur C' fournit le signal resynchronisé Se.

La structure du dispositif de la figure 4 est analogue à celle de la figure 1, à la différence près que la porte optique G' joue le rôle de l'amplificateur saturable A de la figure 1. Les fonctionnements sont donc semblables mais cette dernière réalisation pose moins le problème du taux d'extinction dû au milieu amplificateur saturable, ce qui permet de se dispenser du second étage.

La figure 5 représente une autre réalisation du premier étage, également pour un signal d'entrée S' électrique. Comme précédemment, les sources optiques La-Ld sont commandées par le signal d'horloge d'échantillonnage CK pour fournir les signaux d'échantillonnage CKa-CKd. Les signaux CKa-CKd sont appliqués respectivement à des portes optiques (amplificateurs optiques semi-conducteurs en régime linéaire) Ga-Gd commandées par le signal d'entrée S'. Les sorties de ces portes sont reliées à l'entrée d'un multiplexeur M par l'intermédiaire respectivement de lignes à retard Db, Dc, Dd fournissant les retards voulus. Le multiplexeur M fournit en sortie le signal resynchronisé Se.

La réalisation de la figure 5 peut d'ailleurs être transposée pour un signal d'entrée optique S (non représenté) en disposant à la place des portes optiques Ga-Gd des amplificateurs optiques semi-conducteurs en régime non linéaire. Ainsi, un des ports de chaque amplificateur reçoit un des signaux d'échantillonnage CKa-CKd tandis que le port opposé est couplé à une des entrées du multiplexeur M et reçoit une partie du signal d'entrée. Pour cela, on pourra prévoir un coupleur 1 vers p dont l'entrée reçoit le signal d'entrée S et dont les sorties sont couplées respectivement aux amplificateurs. Cette variante nécessite plusieurs amplificateurs mais elle présente l'avantage de permettre une réalisation intégrée grâce à l'absence de circulateurs. Dans une version simplifiée, le multiplexeur M peut en outre être remplacé par un simple coupleur p vers 1.

L'invention n'est pas limitée aux modes de réalisations qui viennent d'être décrits. En particulier, l'invention couvre une solution équivalente qui consiste à créer les signaux retardés Sa-Sd en appliquant les retards Db, Dc, Dd au signal d'entrée S ainsi qu'au signal d'horloge d'échantillonnage CK et à échantillonner les signaux d'entrée retardés respectivement par les signaux d'échantillonnage retardés correspondants. Cette variante est toutefois moins simple à réaliser car il faut retarder à la fois le signal d'entrée et le signal d'échantillonnage.

Bien entendu, le nombre p de sources peut être quelconque. Ainsi, le cas où p = 2 peut être suffisant en pratique et sera alors préféré pour des raisons de simplicité et de coût.

De même, l'invention ne concerne pas exclusivement la formation de signaux NRZ remis en forme à partir de signaux d'entrée NRZ. Elle permet par exemple de fournir des signaux NRZ à partir de signaux RZ ou réciproquement.

Par ailleurs, le dispositif à retard constitué des filtres Fa, Fb, Fc, Fd montés en cascade par l'intermédiaire de lignes à retard d peut être remplacé par un dispositif équivalent constitué par exemple d'un coupleur relié en parallèle aux filtres par l'intermédiaire de lignes à retard différentes appropriées. Cette solution permet un ajustement plus facile des retards et peut convenir du point de vue pertes si p est petit, par exemple égal à 2. Il peut s'agir aussi d'un montage fonctionnant en transmission et formé par exemple d'un démultiplexeur relié en parallèle à un multiplexeur par l'intermédiaire de lignes à retard différentes appropriées. Cette solution est plus coûteuse mais permet également un ajustement plus facile des retards.

## Revendications

1. Procédé de mise en forme d'un signal d'entrée (S, S') ayant une amplitude modulée entre des niveaux hauts et des niveaux bas qui représentent des données binaires (s1-s4) contenues dans des intervalles de temps bit successifs de durée T0, **caractérisé en ce qu'**il comporte une étape de resynchronisation consistant notamment :
- à former un nombre p de signaux échantillonnés (Sλa-Sλd) obtenus par modulations d'amplitude de p ondes porteuses optiques de longueurs d'onde différentes (λa-λd), chaque signal échantillonné (Sλa-Sλd) étant constitué d'échantillons ayant la forme d'impulsions de fréquence 1/T0, d'une durée déterminée (δ) au plus égale à T0/p et d'amplitude fonction de l'amplitude du signal d'entrée (S, S'),
- à former un signal resynchronisé (Se) constitué d'une combinaison de signaux retardés (Sa-Sd) obtenus en appliquant auxdits signaux échantillonnés (Sλa-Sλd) des retards tels que deux signaux retardés (Sa-Sd) consécutifs quelconques soient décalés temporellement de sensiblement ladite durée déterminée (δ).

2. Procédé selon la revendication 1, **caractérisé en ce qu'**on combine lesdits signaux échantillonnés (Sλa-Sλd) avant de leur appliquer lesdits retards, en exploitant les différences de leurs longueurs d'onde.

3. Procédé selon la revendication 1, **caractérisé en ce qu'**on applique lesdits retards auxdits signaux échantillonnés (Sλa-Sλd) avant de les combiner.

4. Procédé selon la revendication 2, **caractérisé en ce que** lesdits signaux retardés (Sλa-Sλd) sont obtenus en formant des signaux optiques d'échantillonnage (CKa-CKd) résultant de modulations desdites ondes porteuses par un signal d'horloge d'échantillonnage (CK) de fréquence 1/T0, constitué d'impulsions de durée sensiblement égale à ladite durée déterminée (δ) et d'amplitude constante, puis en modulant l'amplitude desdites signaux optiques d'échantillonnage (CKa-CKd) en fonction de l'amplitude dudit signal d'entrée (S, S').

5. Procédé selon l'une des revendications 1 à 4, **caractérisé en ce que** ladite étape de resynchronisation est suivie d'une étape d'égalisation des niveaux bas et/ou hauts du signal resynchronisé (Se).

6. Dispositif de mise en forme d'un signal d'entrée (S, S') dont l'amplitude est modulée entre des niveaux hauts et des niveaux bas qui représentent des données binaires (s1-s4) contenues dans des intervalles de temps bit successifs de durée T0, **caractérisé en ce qu'**il comporte :
- des premiers moyens (La-Ld, M, A, C) pour former un nombre p de signaux échantillonnés (Sλa-Sλd) obtenus par modulations d'amplitude de p ondes porteuses optiques de longueurs d'onde différentes (λa-λd), chaque signal échantillonné (Sλa-Sλd) étant constitué d'échantillons ayant la forme d'impulsions de fréquences 1/T0, de durée (δ) sensiblement égale à T0/p et d'amplitude fonction de l'amplitude du signal d'entrée (S, S'), et
- des seconds moyens (Fa-Fd, d) pour former un signal resynchronisé (Se) constitué d'une combinaison de signaux retardés (Sa-Sd) obtenus en appliquant auxdits signaux échantillonnés (Sλa-Sλd) des retards tels que deux signaux retardés (Sa-Sd) consécutifs quelconques soient décalés temporellement de sensiblement ladite durée déterminée (δ).

7. Dispositif selon la revendication 6, **caractérisé en ce que** lesdits premiers moyens comportent des troisièmes moyens (La-Ld, M) pour former p signaux d'échantillonnage (CKa-CKb) constitués chacun d'impulsions optiques d'échantillonnage portées respectivement par lesdites longueurs d'onde différentes (λa-λd), de fréquence 1/T0 et de durée sensiblement égale à ladite durée déterminée (δ) et des quatrièmes moyens (C, A) pour moduler l'amplitude desdites impulsions d'échantillonnage en fonction dudit signal d'entrée (S, S').

8. Dispositif selon la revendication 7, **caractérisé en ce que** ledit signal d'entrée (S) étant un signal optique, lesdits quatrièmes moyens comportent un milieu amplificateur optique saturable (A) recevant par un premier port ledit signal d'entrée (S) et par un port opposé lesdits signaux d'échantillonnage (CKa-CKb).

9. Dispositif selon l'une des revendications 7 ou 8, **caractérisé en ce que** lesdits seconds moyens comportent p filtres réjecteurs (Fa-Fd) accordés respectivement pour réfléchir lesdites longueurs d'onde différentes (λa-λd) et couplés en cascade par l'intermédiaire de (p-1) lignes à retard (d) dimensionnées chacune pour créer un retard sensiblement égal à la moitié de ladite durée déterminée (δ).

10. Dispositif selon l'une des revendications 6 à 9, **caractérisé en ce qu'**il comporte un convertisseur de longueur d'onde à structure interférométrique (MZ) recevant en entrée ledit signal resynchronisé (Se) et fournissant en sortie un signal remis en forme (Sx).

## Claims

1. A method of shaping an input signal (S, S') whose amplitude is modulated between high levels and low levels representing binary data (s1-s4) contained in successive bit times of duration T0, said method being **characterized in that** it comprises a re-synchronization step consisting in particular in:
forming a number p of sampled signals (Sλa-Sλd) obtained by amplitude modulating p optical carrier waves having different wavelengths (λa-λd), each sampled signal (Sλa-Sλd) being constituted by samples in the form of pulses of frequency 1/T0, of determined duration (δ) not greater than T0/p, and of amplitude that is a function of the amplitude of the input signal (S, S'); and
forming a re-synchronized signal (Se) constituted by a combination of delayed signals (Sa-Sd) obtained by applying delays to said sampled signals (Sλa-Sλd) such that any two consecutive delayed signals (Sa-Sd) are offset in time substantially by said determined duration (δ).

2. A method according to claim 1, **characterized in that** said sampled signals (Sλa-Sλd) are combined before said delays are applied to them, by making use of their different wavelengths.

3. A method according to claim 1, **characterized in that** said delays are applied to said sampled signals (Sλa-Sλd) before they are combined.

4. A method according to claim 2, **characterized in that** said delayed signals (Sλa-Sλd) are obtained by forming sampling optical signals (CKa-CKd) resulting from said carrier waves being modulated by a sampling clock signal (CK) of frequency 1/T0 constituted by pulses of duration substantially equal to said determined duration (δ) and of constant amplitude, and then by amplitude modulating said sampling optical signals (CKa-Ckd) as a function of the amplitude of said input signal (S, S').

5. A method according to any one of claims 1 to 4, **characterized in that** said re-synchronization step is followed by an equalization step in which the low and/or high levels of the re-synchronized signal (Se) are equalized.

6. Apparatus for shaping an input signal (S, S') whose amplitude is modulated between high levels and low levels representing binary data (s1-s4) contained in successive bit times of duration T0, said apparatus being **characterized in that** it comprises:
first means (La-Ld, M, A, C) for forming a number p of sampled signals (Sλa-Sλd) obtained by amplitude modulating p optical carrier waves having different wavelengths (λa-λd), each sampled signal (Sλa-Sλd) being constituted by samples in the form of pulses of frequency 1/T0, of determined duration (δ) substantially equal to T0/p, and of amplitude that is a function of the amplitude of the input signal (S, S'); and
second means (Fa-Fd, d) for forming a re-synchronized signal (Se) constituted by a combination of delayed signals (Sa-Sd) obtained by applying delays to said sampled signals (Sλa-Sλd) such that any two consecutive delayed signals (Sa-Sd) are offset in time substantially by said determined duration (δ).

7. Apparatus according to claim 6, **characterized in that** said first means comprise third means (La-Ld, M) for forming p sampling signals (CKa-CKb), each of which is constituted by sampling optical pulses carried by respective ones of said different wavelengths (λa-λd), of frequency 1/T0, and of duration substantially equal to said determined duration (δ), and fourth means (C, A) for amplitude modulating said sampling pulses as a function of said input signal (S, S').

8. Apparatus according to claim 7, **characterized in that**, when said input signal (S) is an optical signal, said fourth means comprise a saturable optical amplifying medium (A) receiving said input signal (S) via a first port, and receiving said sampling signals (CKa-CKb) via an opposite port.

9. Apparatus according to claim 7 or 8, **characterized in that** said second means comprise p stop filters (Fa-Fd) tuned to reflect respective ones of said different wavelengths (λa-λd) and coupled together in cascade via (p-1) delay lines (d), each of which is dimensioned to create a delay substantially equal to one half of said determined duration (δ).

10. Apparatus according to any one of claims 6 to 9, **characterized in that** it includes a wavelength converter having an interferometer structure (MZ) receiving said re-synchronized signal (Se) as input and outputting a signal that has been reshaped (Sx).

## Patentansprüche

1. Verfahren zur Formung eines Eingangssignals (S, S'), dessen Amplitude zwischen High- und Low-Niveaus moduliert ist, die Binärdaten (s1-s4) repräsentieren, welche in aufeinanderfolgenden Bit-Zeitintervallen der Dauer T0 enthalten sind, **dadurch gekennzeichnet, daß** es einen Resynchronisationsschritt beinhaltet, der insbesondere darin besteht,
- eine Anzahl p von abgetasteten Signalen (Sλa-Sλd) zu bilden, die durch Amplitudenmodulation von p optischen Trägerwellen unterschiedlicher Wellenlängen (λa-λd) erzeugt werden, wobei jedes abgetastete Signal (Sλa-Sλd) aus Abtastwerten besteht, welche die Form von Impulsen der Frequenz 1/T0 sowie eine festgelegte Dauer (δ) höchstens gleich T0/p haben und eine Amplitude aufweisen, die eine Funktion der Amplitude des Eingangssignals (S, S') ist, und
- ein resynchronisiertes Signal (Se) zu formen, das aus einer Kombination verzögerter Signale (Sa-Sd) besteht, die erzeugt wurden, indem die besagten abgetasteten Signale (Sλa-Sλd) derart mit Verzögerungen beaufschlagt wurden, daß zwei beliebige aufeinanderfolgende verzögerte Signale (Sa-Sd) zeitlich ungefähr um die besagte festgelegte Dauer (δ) versetzt sind.

2. Verfahren gemäß Anspruch 1, **dadurch gekennzeichnet, daß** die besagten abgetasteten Signale (Sλa-Sλd) vor der Beaufschlagung mit den besagten Verzögerungen unter Ausnutzung der Unterschiede ihrer Wellenlängen kombiniert werden.

3. Verfahren gemäß Anspruch 1, **dadurch gekennzeichnet, daß** die Verzögerungen auf die besagten abgetasteten Signale (Sλa-Sλd) angewandt werden, bevor diese kombiniert werden.

4. Verfahren gemäß Anspruch 2, **dadurch gekennzeichnet, daß** die besagten abgetasteten Signale (Sλa-Sλd) durch Bildung optischer Abtastsignale (CKa-CKd) erzeugt werden, resultierend aus Modulationen der besagten Trägerwellen mit einem Abtast-Taktsignal (CK) der Frequenz 1/T0, welches aus Impulsen besteht, deren Dauer ungefähr gleich der besagten festgelegten Dauer (δ) und deren Amplitude konstant ist, sowie durch anschließendes Modulieren der Amplitude der besagten optischen Abtastsignale (CKa-CKd) als Funktion der Amplitude des besagten Eingangssignals (S, S').

5. Verfahren gemäß einem oder mehreren der Ansprüche 1 bis 4, **dadurch gekennzeichnet, daß** auf den besagten Resynchronisationsschritt ein Schritt zur Glättung der Highund/oder Low-Niveaus des resynchronisierten Signals (Se) folgt.

6. Vorrichtung zur Formung eines Eingangssignals (S, S'), dessen Amplitude zwischen High- und Low-Niveaus moduliert ist, die Binärdaten (s1-s4) repräsentieren, welche in aufeinanderfolgenden Bit-Zeitintervallen der Dauer T0 enthalten sind, **dadurch gekennzeichnet, daß** es folgende Elemente beinhaltet:
- Erste Vorrichtungen (La-Ld, M, A, C) zur Formung einer Anzahl p von Abtastsignalen (Sλa-Sλd), die sich durch Amplitudenmodulation von p optischen Trägerwellen unterschiedlicher Wellenlängen ergeben, wobei jedes Abtastsignal (Sλa-Sλd) aus Abtastwerten besteht, die die Form von Impulsen der Frequenz 1/T0 haben, von einer Dauer (δ) ungefähr gleich T0/p sind und eine Amplitude aufweisen, die eine Funktion der Amplitude des Eingangssignals (S, S') ist, sowie
- zweite Vorrichtungen (Fa-Fd, d) zur Formung eines resynchronisierten Signals (Se), bestehend aus einer Kombination von verzögerten Signalen (Sa-Sd), die sich ergeben, indem die besagten Abtastsignale (Sλa-Sλd) so mit Verzögerungen beaufschlagt werden, daß zwei beliebige aufeinanderfolgende verzögerte Signale (Sa-Sd) zeitlich ungefähr um die besagte festgelegte Dauer (δ) versetzt sind.

7. Vorrichtung gemäß Anspruch 6, **dadurch gekennzeichnet, daß** die besagten ersten Vorrichtungen dritte Vorrichtungen (La-Ld, M) zum Formen von p Abtastsignalen (CKa-CKb) beinhalten, die jeweils aus optischen Abtastimpulsen bestehen, welche jeweils auf den besagten unterschiedlichen Wellenlängen (λa-λd) transportiert werden, eine Frequenz 1/T0 haben und eine Dauer ungefähr gleich der festgelegten Dauer (δ) aufweisen, sowie vierte Vorrichtungen (C, A) zum Modulieren der Amplitude der besagten Abtastimpulse als Funktion des besagten Eingangssignals (S, S') beinhalten.

8. Vorrichtung gemäß Anspruch 7, **dadurch gekennzeichnet, daß** das besagte Eingangssignal (S, S') ein optisches Signal ist, wobei die besagten vierten Vorrichtungen ein sättigbares optisches Verstärkungselement (A) beinhalten, das über ein erstes Tor das besagte Eingangssignal (S) und über ein gegenüberliegendes Tor die besagten Abtastsignale (CKa-CKb) empfängt.

9. Vorrichtung gemäß einem oder beiden der Ansprüche 7 und 8, **dadurch gekennzeichnet, daß** die besagten zweiten Vorrichtungen p Sperrfilter (Fa-Fd) beinhalten, die jeweils so abgestimmt sind, daß sie die unterschiedlichen Wellenlängen (λa-λd) reflektieren, und über (p-1) Verzögerungsleitungen (d) kaskadiert sind, die jeweils so dimensioniert sind, daß sie eine Verzögerung erzeugen, die ungefähr gleich der Hälfte der besagten festgelegten Dauer (δ) ist.

10. Vorrichtung gemäß einem oder mehreren der Ansprüche 7 bis 9, **dadurch gekennzeichnet, daß** es einen interferometrischen Wellenlängenkonverter (MZ) beinhaltet, der an seinem Eingang das besagte resynchronisierte Signal (Se) empfängt und an seinem Ausgang ein in seiner Form rekonstruiertes Signal (Sx) liefert.
